# EUROPEAN PATENT SPECIFICATION

(11) **EP 1 827 295 B1**
(45) Date of publication and mention of the grant of the patent: **21.01.2009**
(21) Application number: 05814958.4
(22) Date of filing: 13.12.2005
(51) Int. Cl.: A61C 19/00, A61C 5/00

(54) **PREMANUFACTURED DENTAL INSERT**
VORGEFERTIGTES ZAHNÄRZTLICHES INSERT
INSERT DENTAIRE PREFABRIQUE

(30) Priority: 14.12.2004 DK 200401934; 06.07.2005 DK 200500995; 14.09.2005 DK 200501280
(43) Date of publication of application: 05.09.2007
(73) Proprietor: Aproxi APS, DK-2960 Rungsted Kyst (DK)
(72) Inventor: BERTRAM-JACOBSEN, Theis, DK-2400 Copenhagen NV (DK); JACOBSEN, Ole Stæhr, DK-1054 Copenhagen K (DK); HAPPEL, Glen, DK-2960 Rungsted Kyst (DK)
(74) Representative: Milanov, Nina Vendela Maria
(86) International application number: PCT/DK2005/000788
(87) International publication number: WO 2006/063589

(56) References cited:
- WO-A-98/41166
- US-A- 4 666 405
- US-A- 5 567 156
- US-A- 6 022 217
- US-A1- 2004 229 186

## Description

### Field of the Invention

The present invention relates to a dental insert for a tooth filling, said insert comprising a surface and a body extending from said surface.

The present disclosure further relates to a dental insert dummy, a device for handling of a dental insert for a tooth filling, a device of an electromagnetic radiation-conducting material for insertion into a cavity of a dental insert for a tooth filling, a method for incorporating a dental insert for a tooth filling into an interproximal space and a system comprising one or more of the above mentioned dental inserts and devices.

The present disclosure further relates to a production method to produce plastic inserts for dental treatment.

### Background Art

In the field of dentistry, a common procedure is to replace lost or removed tooth material with synthetic fillings. Such fillings are routinely performed after removing damaged tooth material, such as after drilling away caries afflicted areas. When performing such fillings, it is essential to ensure a tight fitting between the new filling and the adjacent tooth. If gaps form between the filling and the adjacent tooth, unwanted material, such as bits of food, can accumulate in the gaps and lead to discomfort for the patient as well as an increased risk of caries and paradontal disease.

A number of materials and compositions are currently used for tooth fillings, including ceramics, glass, porcelain, amalgam and plastic. Amalgam has previously been preferred for most tooth fillings, and has the advantage of being mouldable and relatively easy to fit to an existing tooth surface. However, recently the use of amalgam has declined rapidly due to both cosmetic considerations and the possible risk of toxicity.

As a replacement for amalgam, special composite plastic materials, commonly known as curable composite resins, are often preferred, as they are mouldable and can be shaped according to the specific need. Curing of composite resins is typically carried out with a device capable of transmitting light and specifically adopted to dentistry. Curing may also be performed using chemical means. In order to ensure proper curing, it is often necessary to introduce several layers of composite resin, and initiate curing in each layer before the next layer is applied. The curing process can thus be quite prolonged, hereby increasing the discomfort for the patient.

A known method for performing tooth fillings consists of combining a preformed inclusion with a liquid filling material. Typically, the inclusion is either placed directly in or subsequently surrounded by a curable composite resin, which holds the inclusion in place.

A recurring problem with current techniques is that it is very difficult to place the inclusion in good contact with an adjacent tooth. Such placement requires considerable skill and experience, and only few dentists master it completely. It is difficult to apply pressure correctly to the inclusion via an instrument, and the interaction between the instrument and the inclusion is difficult to control. If the inclusion is not placed in good contact with the adjacent tooth, it will in some instances lead to a new operation, i.e. the inclusion must be removed and a new one inserted, which obviously increases the costs as well as the discomfort for the patient.

Another problem with current techniques is that even if the inclusion is made of a wholly or partly light-transmitting material, proper curing of a surrounding composite resin is very difficult to achieve. This results in prolonged curing times and further discomfort and increased costs to the patient. Furthermore, there is a significant risk of leaving uncured resin in the bottom of the cavity, which may cause further complications.

An additional problem in the prior art is to secure proper curing of the composite resin which is situated under the inclusion. There is thus a need for providing a device which enable proper curing of the surrounding composite resin.

Based on the above mentioned problems with current techniques, there is a need to develop a new kind of dental insert, which makes it easier to achieve contact with an adjacent tooth and avoid gaps between the tooth which is filled and the adjacent tooth, while at the same time having an uncomplicated interaction with an instrument for handling of the insert by a single person.

There is also a need for developing a dental insert which makes efficient curing of surrounding composite resin possible and easy, thus decreasing the time required for the operation and ensuring that the insertion is held correctly in place.

Other related prior art is briefly discussed in the following.

US 4 666 405 discloses an apparatus for preparing a dental filling, especially a light-transmitting adapter for mounting on a fibre optic handpiece for light-induced polymerisation of filling material. The adapter is pressed into the filling material and at the same time against a matrix band which is pressed against the adjacent tooth. Light passes through the fibre optic handle through the adapter and illuminates the filling material. The adapter is removed from the filling when the filling material has been polymerised.

WO 98/41166 discloses a device, a compactor, for mechanical compaction of filling materials in cavities in teeth. The compaction of filling materials can be carried out before and after curing. The filling is cured by means of a curing lamp which is aligned as closely as possible with the compactor which is transparent. The compacted is equipped with an opening and hole for connection to a handle, and is of a shape so that it does not become stuck in the tooth after use.

US 6 022 217 discloses an insert according to the preamble of claim 1 and an oscillating tool for removing defects in a tooth. Inserts are molded in mould chambers of shapes and sizes predetermined by the size of the working head of the oscillating tool.

US 2004/229186 discloses a dental apparatus for use with a curing lamp in filling a tooth preparation. The apparatus has a utility element with a convex top surface, a cone shaped body and a work piece for pushing on a vertical surface of the tooth preparation. Light is directed to the lower portion of the utility element into a curable composite resin. A pushing and pulling force is applied to the distal and mesial end work piece, respectively.

US 5 567 156 discloses a prefabricated inlay having a pin which projects from the inlay part not adapted for insertion and which is arranged to be received in an inlay holder. The inlay is made from a translucent material that is suitable for curing a light-curing material for fixing the inlay in the tooth cavity.

### Summary of the Invention

An object of the present invention is to provide a dental insert as specified in claim 1, which is easy to handle with a device and which may be correctly placed by a single dentist in a minimum of time and with the least possible discomfort to the patient.

Another object of the present invention is to provide a dental insert, which makes effective curing of surrounding composite resin possible, thus reducing the time required for the curing process and hence the discomport and cost to the patient.

The present disclosure relates also to a device for handling of dental insertions in an easy and safe way, thus reducing the risk of dropping or misplacing the insertion, while at the same time making the procedure less technically demanding.

It is moreover an object of the present invention to provide a device which makes curing of the composite resin, which surrounds the insert, possible and easy.

The present disclosure also relates to a method for incorporation of a dental insert, which ensures that the insert is placed in good contact with an adjacent tooth and makes curing of surrounding composite resin possible and easy.

The above objects, together with numerous other objects, advantages and features, which will become evident from the below description, are accomplished by a solution in accordance with the present invention wherein at least one cavity is arranged in the surface, said cavity extending from the surface to at least a centre of the body.

By providing a cavity, which extends from the surface to at least the centre of the body of the insert it is obtained that pressure may be applied to the insert in a controlled fashion via a device or instrument. The matter is that the cavity extending from the surface to at least the centre of the body of the insert, makes it possible to apply pressure via a device directly to the centre of the insert. This gives the dentist better control over the insert, and ensures efficient transfer of force between the device and the insert. Force applied by the dentist can be directed specifically towards the contact point between the insertion and an adjacent tooth, thus ensuring good contact.

The term "centre of the body" is in this context to be construed as being the geometrically centre in relation to the extension of the body or the volume of the body, or the gravity centre of the body.

The cavity may also serve the second purpose of facilitating transmission of radiation, such as light, through the dental insert in order to effectively cure the resin surrounding the insert. Furthermore, with the cavity, the distance that electromagnetic radiation has to pass through to reach the uncured resin will be shorter. This may reduce the number of steps of applying and curing composite resin, since penetration of the curing radiation into the composite resin will be facilitated, which will be described further below.

Advantageously, the cavity according to the invention may in cross section be essentially circular, elliptical or polygonal, such as square or hexagonal whereby different shapes, which is suited for complementary interaction with a corresponding shape of a device or tool are obtained.

According to a preferred embodiment of the invention the cavity may taper from the surface towards the centre of the body. Advantageously, the cavity may be essentially conical. Hereby is obtained that the cavity is designed to facilitate interaction with a device.

The matter is that the cavity may interact complementarily with the tip of a device, said tip having varying shape and size. A cavity, which tapers from the surface towards the centre makes it possible to handle inserts with cavities of varying shape and size with the same device, and similarly using devices with tips of varying shape and size for handling the same insert.

A further advantage of a cavity, which tapers from the surface to the centre, is that attachment of a dental insert to a device is easy. The tip of the device may be inserted into a large opening of the cavity and still attach effectively when pushed further into the cavity. Similarly, a device is easily detached from the cavity.

It is moreover an advantage of a cavity, which tapers from the surface to the centre, that filling of the cavity with filling material after incorporation of the dental insertion into an interproximal space is easy.

The cavity may according to the invention extend through the dental insert, thereby creating a channel through the insert and facilitating the transmission of electromagnetic radiation, such as light, through the insert.

The cavity may be open to a side of the body of the dental insert. This is to be construed as that the cavity may be in the form of a crack, cleft, chasm or the like, which extends from the surface of the body of the insert, but is also open to a side of the body of the insert. This form of the cavity could be advantageous for easy interaction between a device for handling the insert and the insert, and it may also prove advantageous for various tooth filling operation where dental inserts are required.

According to the invention the body of the dental insertion may be shaped for complementary interaction with a tooth, whereby good contact is established between the insertion and the adjacent tooth, thus avoiding gaps between the same.

Furthermore, the dental insertion may be made of plastic, porcelain, glass or any combination thereof.

Advantageously, the dental insert may according to the invention be made of a transparent material.

In a preferred embodiment according to the invention the dental insert may consist of a material capable of curing in response to electromagnetic radiation, such as light. This makes the formation of physical and/or chemical bonds between the insert and the filling material possible during curing, thus causing a good incorporation of the insert in the tooth.

Additionally, by having the cavity tapered the electromagnetic radiation, such as light, will, when hitting the sloping sides of the cavity, be refracted, thus enabling good propagation of radiation through the dental insert.

Furthermore, the dental insert may according to the invention be made of composite resin. Preferably, the composite resin is a mixture of a basis material and filler particles and may consist of maximally around 30% basis material, such as 50% bisphenol-A-diglycidylether-dimethacrylat and 50% triethylen-glycol-dimethacrylat, while the rest is filler particles. Other usable compositions of composite resins will be obvious to the skilled person.

Furthermore, the composite resin is a mouldable material, which is very well suited for a dental insertion. In addition, the composite resin may also be used as filling material, and hence using the same material for the insert causes a good incorporation of the dental insert into the filling material.

Advantageously, the composite resin may be at least partially uncured. Such a partially uncured composite resin may retain un-activated bonds. These bonds may form physical and/or chemical bonds with a filling material upon curing, thus causing good incorporation of the dental insert into the filling material and thereby a secure fixation of the insert in the tooth.

The present disclosure relates to a dental insert dummy having similar dimensions to a dental insert for a tooth filling and being made of an inexpensive material, such as plastic, said dummy being used for determining the size and/or shape of the dental insert to be used.

The present disclosure also relates to a device for handling of a dental insert for a tooth filling, said device havinq a handle and a tip, wherein the tip of the device may be arranged for complementary interaction with a cavity of the dental insert.

Advantageously, the tip may be transparent so that electromagnetic radiation, such as light, may pass through the tip of the device for curing surrounding composite resin and/or the insert.

Furthermore, the tip of the device may be arranged to allow movement and/or rotation of the tip in relation to the handle.

In expedient manner the tip may be arranged to allow movement and/or rotation of the insert in relation to the tip.

Advantageously, said device may be arranged for transmission of electromagnetic radiation, such as light, for curing of an at least partially uncured composite resin.

Furthermore, the tip may be of an electromagnetic radiation-conducting material, thus facilitating transmission of electromagnetic radiation, such as light, through the insert.

The device may comprise a lens, such as a Fresnel lens, for focusing electromagnetic radiation, such as light, at the tip of the device.

The tip of the device may comprise a lens adapted for spreading or diffusing incoming electromagnetic radiation, such as light, to ensure that the radiation is effectively spread out of the tip and into a surrounding dental insert and/or an uncured resin.

The tip of the device may be shaped as a cone in order to conduct and focus incoming electromagnetic radiation, such as light.

The device may be made of a material or a combination of materials, such as plastic, glass or steel, suitable for being subjected to sterilization, e.g. by autoclave. In particular, the device may be made of a thermoplastic polymer.

A device, which is not part of the invention, is obtained, which both may be used to handling an insert as well as to conduct electromagnetic radiation into the insert. Hereby, the dentist may in an expedient manner handle the insert, conduct radiation into the insert and thereby cure the surrounding composite resin.

Moreover, a dental insert dummy may be fastened to the tip of the device. This allows easy and fast testing of dummies .

The present disclosure also relates to a device of an electromagnetic radiation-conducting material, such as a light conducting plug, for arrangement into a cavity of a dental insertion for a tooth filling.

The present disclosure also relates to a method for incorporating a dental insert for a tooth filling into an interproximal space, comprising the steps of
- attaching of the dental insert on a device for handling of said dental insert,
- arranging the dental insert into an interproximal space filled with composite resin,
- applying pressure to the dental insert to ensure contact with an adjacent tooth, and
- curing of the composite resin at least partially surrounding the dental insert by use of electromagnetic radiation, such as light.

Said method may also comprise a further step of arranging a device of an electromagnetic radiation-conducting material, such as a light conducting plug, into a cavity of the dental insert.

The method may furthermore comprise a prior step of testing dental insertion dummies for determining the size and/or shape of the dental insert to be used.

The present disclosure also relates to a system or a kit comprising at least one dental insert for a tooth filling and/or at least one device for handling of dental inserts and/or at least one dental insert dummy and/or at least one device of an electromagnet radiation conducting material, such as a light conducting plug.

The present disclosure also relates to a production method to produce plastic inserts for dental treatment. Plastic inserts are used by dentists for dental treatment. Dentists put plastic inserts in teeth in connection with tooth reparation. Plastic inserts can be fastened to the plastic that is in the tooth and left in the tooth.

When you produce plastic inserts in for example composite plastic, by injection moulding, where the plastic is heated first, the plastic is set almost 100%. If the plastic is very set, the plastic can subsequently not enter into sufficient chemical bonding, with the plastic that it has to be cured with in the tooth. Therefore this production method is not optimal for production of this type of inserts. It is also important that the plastic inserts form a sufficient oxygen inhibition layer, otherwise they will not form good bonding with the plastic in the tooth. A different problem with plastic inserts is that they are often very small about 2-6 mm in diameter, and it can therefore be very difficult to handle the inserts. If you for example produce them in a mould and after has to move them to a packaging, the risk of error is large. Production and handling of small insertions will ask big demands for the production, and it will therefore be connected with large costs. It is also important, that you avoid that the inserts get dirty or are exposed to air pollution, before they are packed. Otherwise you risk, that the inserts will not form sufficient bonding with the plastic in the tooth.

The method that is described in this patent is both faster, better and cheaper than conventional production methods while at the same time, it is more flexible and makes it easy to scale the production up or down.

The production method for production of plastic insertions for dental treatment is characterized by, that liquid light curing plastic is filled directly into a prefabricated packaging, which has holes with the same form as the finished inserts must have, and allows the creation of sufficient oxygen inhibition layer. After this the liquid plastic is light cured, while it is in the packaging, i.e. the packaging works as a mould.

Provided that you want the plastic inserts to contain holes in the middle, this can be achieved by, before the plastic is cured, placing a plate with holes above the packaging with the liquid plastic, and then placing another plate with pins that fit the holes of the other plate, the pins are long enough to go into the liquid plastic. The light curing is achieved by exposing the plastic with light of an appropriate wavelength, e.g. ultraviolet light, what light source should be used depends on the type of plastic that is used. If the packaging consists of transparent plastic, the lightning can be achieved with a lamp from below and up through the packaging. Alternatively the plate with holes or the plate with pins can be produced in a light conducting material e.g. plastic or glass, which makes it possible that the lightning can take place through these layers. The exposure time will vary depending on how strong the light source is. A strong lamp will be able to cure the plastic inserts in 30 seconds. After the plastic is cured, first the plate with pins is removed and thereafter the plate with holes, hereafter the packaging with the cured inserts is finished. The plate with pins will cause, that the finished inserts have holes with a size that corresponds to the part of the pins that goes down into the uncured plastic. By varying the length of the pins you can vary the size of the holes in the inserts. Because the holes in the inserts are created already while the inserts are cast, you do not have to drill the holes after. The plate with holes that lies between the plate with pins and the packaging, secures, that the inserts are not pulled out of the packaging when the plate with pins is removed.

The above described mould can also be supplied with small entrance canals so that you can inject the plastic into the mould and the packaging while it is whole. This can have a number of advantages. For example you can save time, because you do not have to assemble the form after the plastic is filled in the packaging.

The plate with pins can be produced in several different materials, e.g. steel, aluminum, other metals, glass, plastic, or other. The pins can have many different shapes, e.g. they can be rounded, square, triangular etc. It is an advantage if the pins are conically shaped so that the diameter at the end of the pins is smaller than the body, because then it is easier to get the tip of the pins through the holes in the other plate, and get the body of the pins to fit the holes tight.

The plate with holes can also be produced in several different materials, e.g. steel, aluminum, other metals, glass, plastic, rubber, etc.

To avoid that the inserts are pulled up when the pins are lifted up, there a several methods that can prevent this. One example is the plate with holes that is mentioned in this description. A different method is to rotate the pins in the inserts before the pins are lifted away; hereby the tips are released from the insertions. The pins can be rotated and removed before the curing of the plastic is finished. It can be easier to remove the pins before the plastic is totally cured. If these methods are used you do not have to use the plate with holes. Similar methods can also be used. The central point is, that these methods secure that the insertions are not removed from the form when the pins are removed.

When the inserts are cured, you can achieve advantages by not curing them totally, before the pins are lifted away from the inserts. If you cure the inserts totally, you risk e.g. that the inserts are stuck to the pins, and that it can be difficult to free the inserts from the pins. By controlling the light exposure of the inserts, and only curing them partly before the pins are removed, it become easier to remove the pins. E.g. you can chose only to expose the insertions e.g. 0.1-15 seconds, while the pins are placed in the inserts, hereafter remove the pins, and then expose the inserts for another e.g. 15-180 seconds.

When the liquid plastic is dosed into the form, it is important that it is done properly. For one thing you have to make sure that it is the proper amount of plastic, which is filled into the form, but at the same time you also have to make sure, that the form is filled right. If the liquid plastic is filled wrongly into the form, several different complications can arise. E.g. you risk that air bubbles are caught in the form. This will cause the inserts to be deformed and defective. You also risk that the liquid plastic hit the edge of the form, while it is filled into the form, hereby you risk, that the surface of the inserts are not level. One way to ensure that the dosing is good is e.g. by using a computer aided dosing machine.

It is important to ensure, that there is the proper lighting in the production room. There should not be light in the room, which can make the plastic cure at an unwanted timer, e.g. when the plastic is dosed. By only using lighting that does not affect the curing, you avoid this and similar problems. The problem can be solved by providing the lamps with filters, which remove the light waves that can activate the plastic. Another alternative could e.g. be to let the room be dark.

One of the advantages of casting the inserts directly in the packaging is that you avoid handling the insertions and hereby reduce the risk of inserts being lost or damaged. The inserts are very small and therefore very difficult to handle. A different advantage is that you avoid that the inserts get dirty and exposed of air pollution before they are packed. This is important because otherwise you risk that the inserts can not form sufficient bonding with the plastic in the tooth.

It is also an advantage that you can secure the formation of optimal oxygen inhibition layer around the plastic inserts. To secure the formation of sufficient oxygen inhibition layer around the inserts, it is crucial that the surface of the inserts, are exposed to oxygen before the plastic inserts have finished curing. This problem can be solved by designing the packaging in a material, which allows the supply of oxygen to the plastic inserts. Several different materials can fulfill this purpose, e.g. certain plastic types, and silicone.

Depending of the amount of oxygen and the time period, the inserts are supplied with oxygen the thickness of the oxygen inhibition layer will vary. Much oxygen will cause thicker oxygen inhibition layer. One way to secure the formation of sufficient oxygen inhibition layer can be by letting the form that the inserts are cast in, give oxygen to the inserts. E.g. the form can be made of a material, which can give oxygen to the inserts, silicone or several different plastic materials have this ability. A different option is to let the surface of the form be made such that it allows that the inserts are supplied with sufficient oxygen. E.g. you can let the surface of the form be porous, so that oxygen is caught in the surface and secures the formation of oxygen inhibition layer.

The packaging can be produced in conventional way, e.g. by injection moulding, and it should contain small rooms/holes with the same form as the finished insertions should have. The number of rooms/holes in the packaging can be varied depending on needs, possibly the packaging can be cut into smaller pieces after the plastic insertions have been cast. The packaging can e.g. be made of plastic, silicone or other materials. It can be an advantage if the material is soft, because after it makes it easier to free the inserts from the packaging. It is important to secure, that the material the packaging is made of, do not form bad connections with the plastic insertions that are cured in the packaging, because otherwise the inserts can be damaged. If the material of the packaging is transparent, it is possible to cure the liquid plastic through the packaging.

One of the advantages by light curing the inserts instead of e.g. injection moulding where the plastic is heated first is, that you avoid that the inserts are set 100%. Hereby you achieve that the inserts can form chemically bonding with the plastic in the tooth.

The plastic type that is most wide spread among dentists today is light curing composite plastic. The production method that is described in this patent makes it possible that you use the same type of plastic for the production of the inserts as the dentists use for plastic fillings. This is an advantage, because if the inserts are made of the same type of plastic they will be better integrated in the plastic filling in the tooth, and they will be able to form chemically bonding with the plastic in the tooth when it is light cured. The invention is not limited only to use light curing plastic. The invention can also be used together with chemically curing plastic.

The method described in this patent is both faster, better and cheaper than conventional production methods and at the same time it is very flexible and makes it easy to scale the production up or down. The very simple way that the production method is constructed makes it possible that you in the beginning can perform the production manually by dosing the liquid plastic in the packaging yourself and place the plates at the packaging and light cure the inserts. Later if a larger production is required, it is easy to automate the production by e.g. letting a dosing machine dose the liquid plastic into the packaging, and perhaps letting a machine collect and separate the different layers from each other. The shape of the packaging and the number of holes can easily be varied.

In another variant of the invention you can replace the packaging with a conventional mould in e.g. metal, steel, aluminum, glass, plastic, or other. This production method will be relevant if you want to pack the insertions in a special type of packaging that can not be used as mould, e.g. because the surface is to porous. The cast of the plastic inserts in a mould is very similar to the cast directly in the packaging. The mould can have the same shape as the packaging. First an appropriate amount of liquid plastic is dosed into the mould, hereafter a plate with holes is placed, hereafter a plate with pins is placed, and hereafter the plastic is light cured through one of the layers, which is transparent, with an appropriate light source. Now it will be necessary to free the inserts from the mould, after they have been cast. The liberation can be achieved by turning everything up side down and thereafter lifting the mould away. Hereafter the inserts will be sitting on the pins with the bottom turning up. Hereafter an appropriate packaging can be pressed down over the inserts, hereafter you turn the form back to the starting point. Hereafter you first remove the plate with pins, then the plate with holes, and now the inserts are finished and packed.

The above described form can also be supplied with small injection canals so that you can inject the plastic into the mould while it is still together. The cast in the mould is more difficult than cast directly in the packaging.

To ensure that the inserts are liberated from the mould when it is lifted away, you can e.g. send vibrations through the mould, the vibrations can be created by e.g. giving the mould a shock before it is removed entirely. The vibrations through the mould will cause any remaining inserts to fall out, and land on the pin below them.

The invention is explained further in the following, under reference to drawings, and it is shown how the invention can be constructed. The drawings are only guiding, and the invention can be constructed in many other ways and with other measures and dimensions, and is therefore not limited to the shown examples.

### Brief Description of the Drawings

The invention and its many advantages will be described in more detail below with reference to the accompanying schematic drawings, which for the purpose of illustration show some non-limiting embodiments and in which
Fig. 1 shows a dental insertion for a tooth filling according to the invention in perspective,
Fig. 2 shows in a side view the dental insertion,
Fig. 3 shows a device for handling of a dental insert according to the invention in perspective,
Fig. 4 shows the dental insert for a tooth filling in contact with a device for handling of a dental insert and placed in an interproximal space,
Fig. 5 shows a part of a device for handling a dental insert,
Fig. 6 shows a part of a device for handling a dental insert with a dental insert attached to the device,
Fig. 7 shows a packaging, with holes for inserts,
Fig. 8 shows a packaging filled with liquid plastic,
Fig. 9 shows a plate with holes that is placed on top of the packaging with liquid plastic,
Fig. 10 shows a plate with pins,
Fig. 11 shows a plate with pins, put on top of plate with holes and packaging, so that the pins are pressed down into the liquid plastic, and
Fig. 12 shows a packaging with finished inserts with holes in them.

All the figures are highly schematic and not necessarily to scale, and they show only parts which are necessary in order to elucidate the invention, other parts being omitted or merely suggested.

### Description of Preferred Embodiments

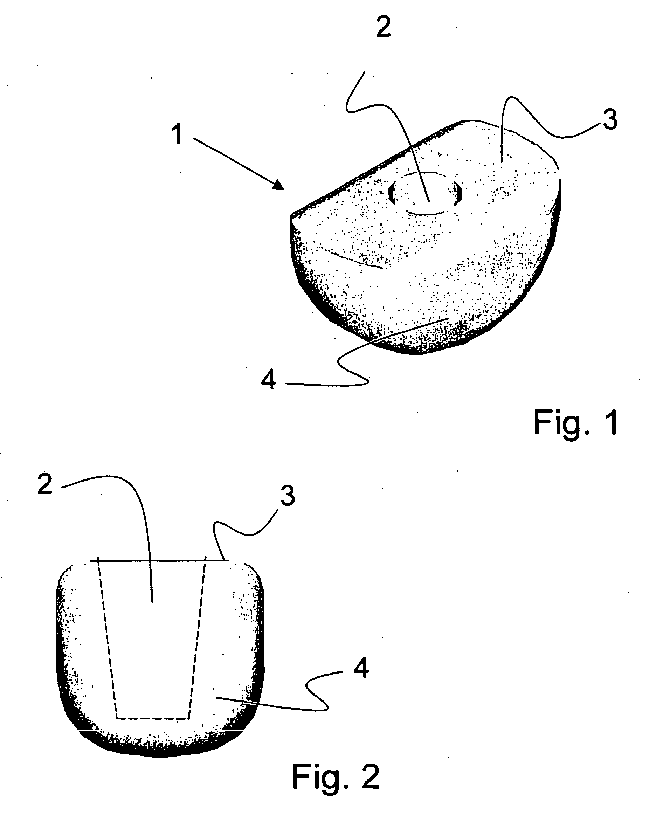

A dental insert 1 according to the invention is shown schematically in Fig. 1. The dental insert 1 comprises a cavity 2, a surface 3 and a body 4. According to the inventive idea the cavity 2 extends from the surface 3 to at least the centre of the body 4, which is shown in Fig. 2, wherein the dashed line represent the extension of the cavity 2.

The dental insert 1 may have various shapes and dimensions, although dimensions of 1-10mm in both height, breadth and depth are usually preferable in clinical practice.

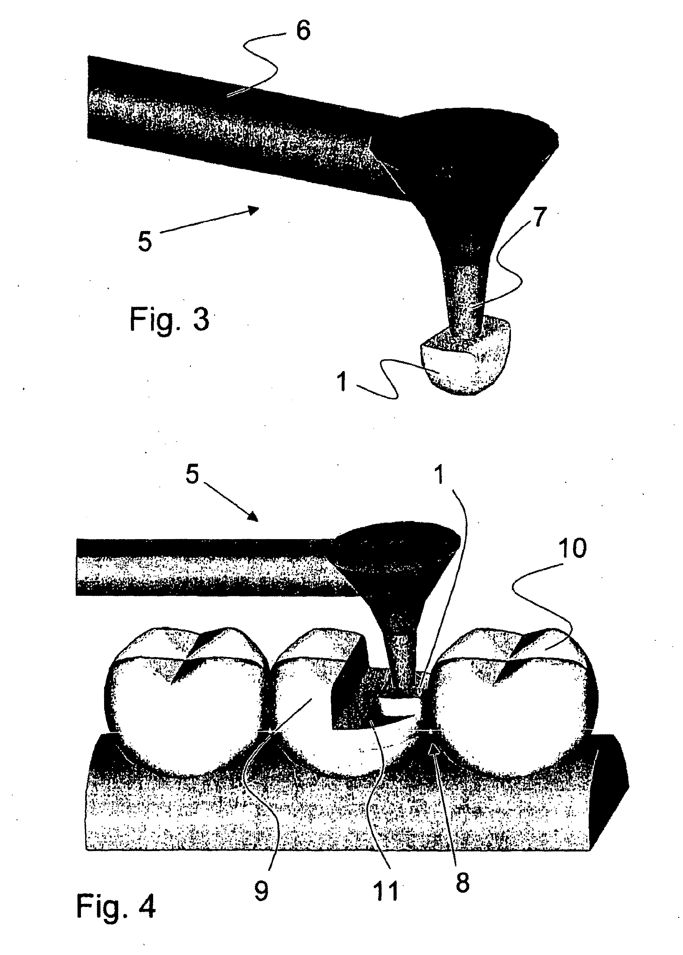

According to the invention the cavity 2 may have several different geometrically shapes. It may for instance in cross section be essentially circular, elliptical or polygonal, such as square or hexagonal. As mentioned above, these shapes are all well suited for complementary interaction with a tip 7 of a device 5. However, a cavity 2 with a circular cross section has the additional advantage of allowing the dentist to fasten the insert 1 to a tip 7 of a device 5, in any position desired. This gives a desired flexibility in handling of the insert 1, making it easy to arrange the insert 1 properly into an interproximal space 8. Furthermore, the flexibility in handling obtained e.g. by a cavity 2 with a circular cross section makes it possible and easy for the dentist to use either hand, switch hands during the procedure and easily operate on any tooth regardless of its position. A circular cross section also makes filling of the cavity 2 with composite resin subsequent to incorporation into an interproximal space 8 easy. The design of the device 5 according to an aspect of the present invention will be described in connection with Fig. 3 below.

In Fig. 2 is the cavity 2 shown in one embodiment according to the invention, wherein it tapers from the surface 3 towards the centre of the body 4. However within the inventive idea the cavity 2 may have other geometrically shapes.

In a preferred embodiment the cavity 2 is essentially conical, whereby the larger opening of the cone facing the surface 3 of the dental insert 1, has the advantage of facilitating interaction with a device 5 or instrument. The conical cavity 2 may interact complementarily with devices 5 with tips 7 of varying shape and size. Small differences in size between the tip 7 of a device 5 and a conical cavity 2 have little or no influence on the interaction between the tip 7 and the cavity 2. Thus, a single device 5 may be used to handle dental inserts 1 with cavities 2 of varying size and shape, and a single dental insert 1 can likewise be handled with devices 5 with tips 7 of varying size and shape. This makes the handling of dental inserts 1 fast and inexpensive, since both few changes of device 5 and few specific devices 5 are required. A further advantage of a cavity 2, which is essentially conical, is that attachment of a dental insert 1 to a device 5 is easy. The tip 7 of a device 5 may be inserted into a large opening of a conical cavity 2 and still attach effectively when pushed further into the cavity 2. Similarly, the device 5 is easily detached from a conical cavity 2.

Furthermore, these shapes are all suited for facilitating the transmission of electromagnetic radiation, such as light, through the dental insert 1. An additional advantage of the cavity 2, which is essentially conical, is that electromagnetic radiation hitting the sloping sides of the cavity 2 is refracted, thus enabling good propagation of radiation through a dental insert 1. Also, an essentially conical cavity 2 makes filling of the cavity 2 with composite resin, subsequent to the integration of the insert 1, easy.

In expedient manner the body 4 of the dental insert 1 may be shaped for complementary interaction with a adjacent tooth whereby good contact between the dental insertion 1 and the adjacent tooth 10 are established and to avoid gaps between the dental insert 1 and the adjacent tooth 10. One way to achieve good contact between the dental insert 1 and the adjacent tooth 10 is to shape the body 4 so that the contact point will be near the surface 3 of the dental insert 1, thus making the contact point visible to the dentist. Furthermore, by having the contact point near the surface 3 of the dental insert 1, it is possible to use a small/low dental insert 1, thus facilitating the transmission of electromagnetic radiation, such as light, through the dental insert 1.

According to the invention, a dental insert 1 may be made of plastic, porcelain, glass, or any combination thereof. These materials are all well suited for a dental insert 1 with a cavity 2 extending at least from the surface 3 to a centre of the body 4.

Preferably, the dental insert 1 may be made of a transparent material. When the dental insert 1 is made of a transparent material propagation of electromagnetic radiation, such as light, is facilitated through the dental insert 1 and out into a filling material 11. This may allow rapid curing of the filling material 11 around the dental insert 1 as well as by the insertion 1 it self.

Most preferably, the dental insert 1 may be made of a material capable of curing in response to electromagnetic radiation, such as light. This makes the formation of physical and/or chemical bonds between the dental insertion 1 and the filling material 11 possible during curing, thus causing a good incorporation of the dental insert 1.

The matter is that providing the insertion 1 in a transparent material in combination with the cavity 2 it is obtained that the total transparency of the insert 1 is increased, thus, improving the lighting of the uncured resin surrounding as well as being placed below the insertion 1. The dentist can during use cure the uncured resin by using the cavity 2 whereby a firm and secure base is obtained for the entire filling before filling the rest of the resin in the tooth.

Within the inventive idea a plurality of cavities may also be arranged in the insert 1 whereby the transparency of the insert 1 is improved.

A device 5 for handling of a dental insert 1 according to the invention is shown schematically in Fig. 3. The device 5 comprises a handle 6 and a tip 7. The handle 6 is arranged for easy handling by a dentist and the tip 7 is arranged for complementary interaction with a cavity 2 of a dental insert 1.

The tip 7 may have any shape, such as cylindrical, conical, square or any other shape, which is preferable for interaction with a cavity 2 of the dental insert 1. Most expedient the tip 7 is tapered thus allowing it to easily engage the cavity 2.

According to an embodiment the tip 7 may be transparent, thus allowing electromagnetic radiation, such as light, for curing of the dental insert 1 to pass through the tip 7 of the device 5.

Furthermore, the tip 7 may be of an electromagnetic radiation-conducting material. This may facilitate transmission of light through the dental insert 1, thus enabling effective curing of filling material 11 and/or the dental insert 1. In a specific embodiment, the tip 7 may be essentially conically shaped, with an upper surface arranged for catching incoming electromagnetic radiation, such as light, and facilitating transmission of said radiation through the tip 7 of the instrument 5 and into the dental insert 1. Such an embodiment may enable the dentist to hold the dental insert 1 in place while at the same time curing a surrounding composite resin, thus facilitating the curing procedure and saving time.

A dental insert dummy may be fastened to the tip 7 of the device 5, thus allowing for easy and fast testing of dummies.

Advantageously, the tip 7 of the device 5 may be arranged to allow movement and/or rotation of the tip 7 in relation to the handle 6. This may for instance be accomplished by mounting the tip 7 on the handle 6 by use of a ball bearing. Rotation of the tip 7 in relation to the handle 6 allows a dental insertion 1 attached to the tip 7 to adjust to a surface, e.g. an adjacent tooth 10, in response to pressure applied via the device 5 in the direction of the surface. This may ensure a good fitting of the dental insert 1 to the adjacent tooth 10.

In another embodiment, the tip 7 of the device 5 may be arranged to allow movement and/or rotation of the dental insert 1 in relation to the tip 7. Rotation of the dental insert 1 in relation to the tip 7 allows the dental insert 1 attached to the tip 7 also to adjust to an adjacent tooth 10, in response to pressure applied via the device 5 in the direction of the surface. This may ensure a good fitting of the dental insert 1 to the adjacent tooth 10. One way in which to allow rotation of the dental insert 1 in relation to the tip 7, is to have a cavity 2 with an essentially circular cross section. A cavity 2 with an essentially circular cross section has the further advantages of allowing flexible fastening to the tip 7 of the device 5, as well as being easy to fill with composite resin subsequent to incorporation into an interproximal space 8. Also, a circular cross section makes loosening of the tip 7 from the cavity 2 easy. These further advantages are also dealt with in connection with Fig. 1 above.

Preferably, the device 5 may be arranged for transmission of electromagnetic radiation, such as light, for curing of a filling material 11, such as at least partially uncured composite resin. This may be accomplished by equipping the device 5 with one or more light transmitting devices, such as optical fibres. The device 5 adapted for transmission of electromagnetic radiation, may simplify the procedure of incorporating a dental insert 1 considerably. Instead of using two separate devices for handling the dental insert 1 and transmitting light, these functions are combined in one device 5, thus ensuring proper curing, avoiding discomfort to the patient caused by the use of two instruments and as well speeding up the procedure.

Also, the upper surface of the tip 7 may comprise a lens, such as a Fresnel lens, which collects the light and conduct it towards the tip 7. It should be mentioned that a Fresnel lens is only one example of lens, others may as well be used such as a normal convex lens. Test have shown that by using a lens a higher efficiency of the light conduction is obtained. Furthermore, directional radiation is preferred.

In addition, tests have also shown that the angle of the light source influences the distribution of the light through the device 5. The best results are achieved by applying the light vertically down through the tip 7 of the device. However, during operation it is practically impossible to secure that the light source is held in a secure vertical position in relation to the device 5. However, by designing the upper surface of the tip 7 of the device 5 substantially flat, it is obtained that the light source can rest on or abut the flat surface, whereby a substantially vertically distribution of light down through the tip 7 is obtained.

Also, the lens may comprise a substantially flat upper surface. Such a flat upper surface makes it easy to ensure a substantially vertical distribution of light down through the tip 7. The upper surface of the lens may constitute the upper surface of the tip 7.

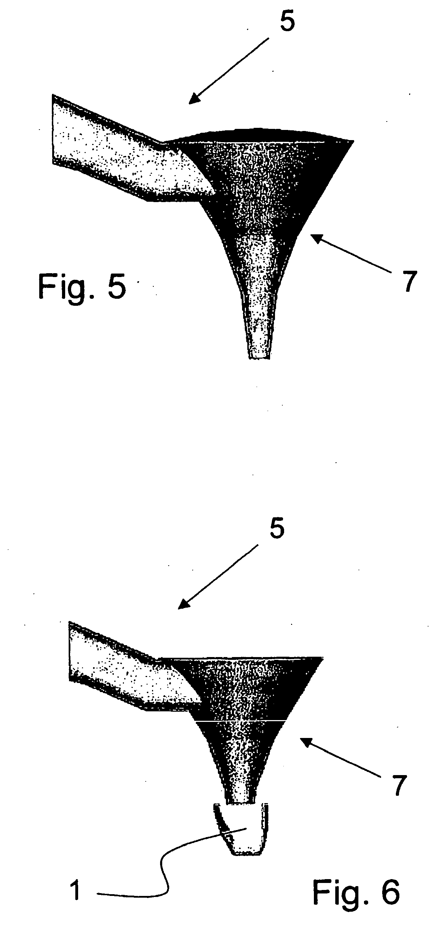

Different embodiements of the tip 7 of the device 5 are shown in fig. 5 and fig. 6. In fig. 5 the upper surface of the tip 7 is shown as rounded, whereas the upper surface is shown as flat in fig. 6.
Furthermore, at the tip 7 of the device 5 it is advantageous if the light is spread again, thereby enabling lightning of the surroundings of the tip 7. This spreading of light may be obtained by designing the tip 7 with a blunt surface with or without rounding, or with an internal conical shape, or with a lens which is adapted to spread the light.

In Fig. 4 a dental insert 1 in contact with a device 5 and placed in an interproximal space 8 of a tooth requiring filling 9 is shown schematically. The dental insert 1 is in contact with an adjacent tooth 10 and partly surrounded by a filling material 11. The dental insert 1 is held in contact with an adjacent tooth 10 by applying pressure to the dental insert 1 via a device 5. The tip 7 of the device 5 is in complementary interaction with the cavity 2 of the dental insert 1. In order to hold the dental insert 1 in place when removing the device 5, a filling material 11 may be applied to at least partly surround the dental insert 1.

During use of the inventive idea the method for incorporating the dental insert 1 for a tooth filling into an interproximal space 8, comprises the steps of attaching of the dental insert 1 on a device 5 for handling of said dental insert 1. Hereinafter is the dental insert 1 arranged into an interproximal space 8 and pressure is applied to the dental insert 1 to ensure contact with the adjacent tooth 10. Finally curing of a composite resin at least partially surrounding the dental insert 1 is carried out by use of electromagnetic radiation, such as light. Hereby is obtained an expedient way to ensure both good contact to the adjacent tooth 10 and good incorporation of a dental insert 1 into the interproximal space 8.

By fixating the dental insert 1 to the device 5 a better control and a possibility for using a higher force, when the insert 1 shall be pressed against the adjacent tooth 10 is obtained. The pressure may either be applied by pulling or pushing with the device 5. The pressure which the dentist apply to the adjacent tooth 10 makes the tooth displace itself in the direction of the force. It is therefore of high importance that the attack point of the force is applied near the centre of the insertion 1 so that a high and controlled force may be used.

The above mentioned method is also expedient when a matrix tape (a well known method in the art and will therefore not be explained further) is being used around the filling area, due to the adjacent tooth 10 gliding back and compensating for the thickness of the matrix tape, when this is removed. The consequence is that an optimum contact surface to the adjacent tooth 10 is obtained.

Furthermore, by using the dental insert 1 of the invention the consumption of uncured composite resin is reduced. A further advantage is that the insert 1 contributes to the distribution of the resin in the filling area when it is being pressed down into the uncured composite resin.

The dental insert 1 according to the invention also provides less setting contraction in the filling. The matter is that when the dentist cures the composite resin, which has been filled into the tooth, it will contract. The consequence is that the dentist have to fill in the resin in several steps. If the dentist fill in to much resin there might arise tensions in the tooth, whereby it may be sensitive, in worst case it may split when the resin contract. By using the inventive insert 1 this is reduced or avoided due to the fact that the insert 1 is contracted when being used and the dentist is capable of using less uncured composite resin. This facilitate a rapid filling and is not as time-consuming as the prior art.

Within the inventive idea a device of an electromagnetic radiation-conducting material, such as a light conducting plug, may be arranged into the cavity 2 of the dental insertion 1. Such a step may be desirable to ensure curing of a composite resin around the dental insert 1 and/or of the dental insert 1 itself.

A dental insert dummy having similar dimensions to a dental insert 1 and being made of an inexpensive material, such as plastic, may be used for determining the size and/or shape of the dental insert 1 to be used is provided. By using the dental insert dummy for determining the size and/or shape of the dental insert 1 to be used, bacterial contamination of the actual dental insertions 1 may be avoided, thus avoiding waste of the expensive actual dental inserts 1. Instead, inexpensive dental insert dummies may be used for preliminary testing and afterwards discarded, thus decreasing the cost of the operation.

A device of an electromagnetic radiation-conducting material, such as a light conducting plug, for arrangement into a cavity 2 of a dental insert 1 is disclosed. Such a device may serve to facilitate the propagation of electromagnetic radiation, such as light, through a dental insert 1, and hence may ensure good curing of filling material 11 around the dental insert 1 and/or the dental insert 1 itself.

Advantageously, the dental inserts 1 are premanufactured in different standard sizes, and may be delivered in a kit or system comprising several predetermined shapes and sizes, whereby the dentist in expedient manner have a plurality of inserts 1 to choose from.

In some cases it may even be advantageous to manufacture the dental inserts 1 in the clinic using a composite resin and a casting mould.

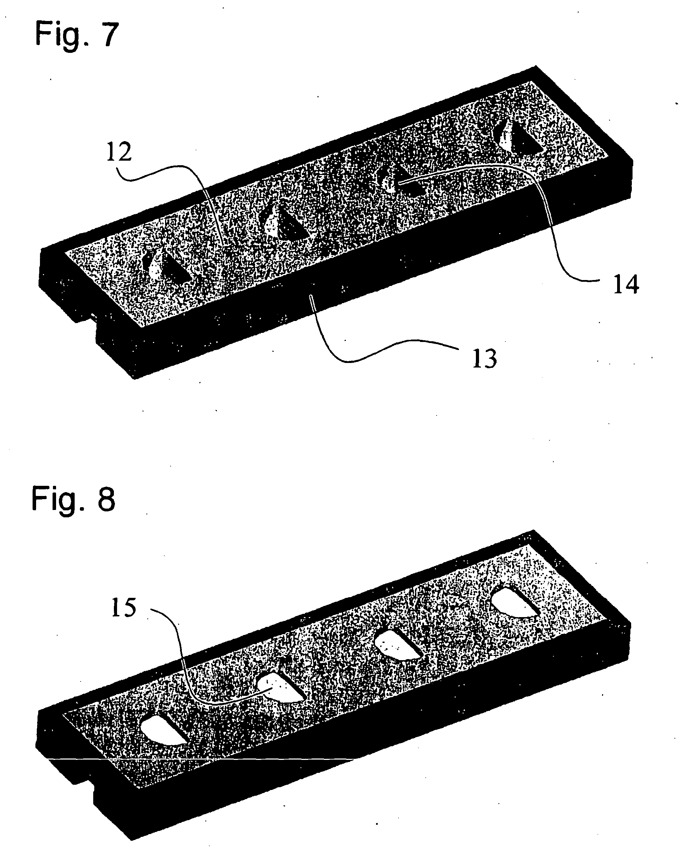

In the following a production method will be described with reference to figures 7-12 in which a packaging 12, a steel frame 13, a hole in packaging 14 with same shape as final insert, a liquid plastic 15, a plate 16 with holes 17, a plate 18 with pins 19 and finished inserts 20 are seen.

At first the packaging 12 with holes 14 is placed in steel frame 13. The steel frame 13 ensures that the packaging 12 is fastened (c.f. fig 7).

Liquid composite plastic 15 is filled into the holes 14 in the packaging 12 either manually or automatic by dosing machine (c.f. fig. 8).

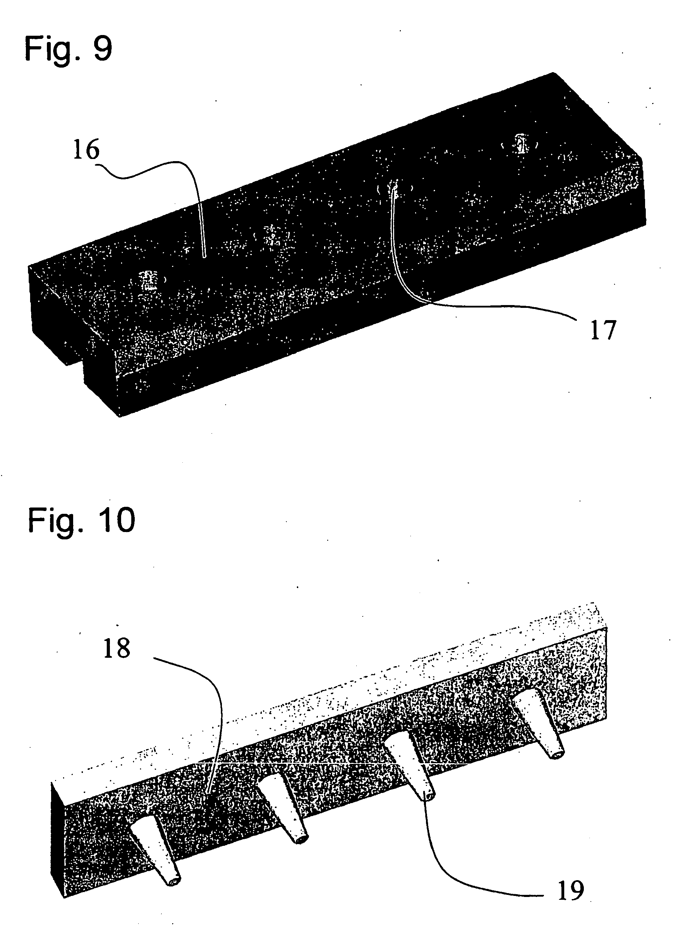

Plate 16 with holes 17 is placed on top of the packaging with the liquid plastic (c.f. fig. 9).

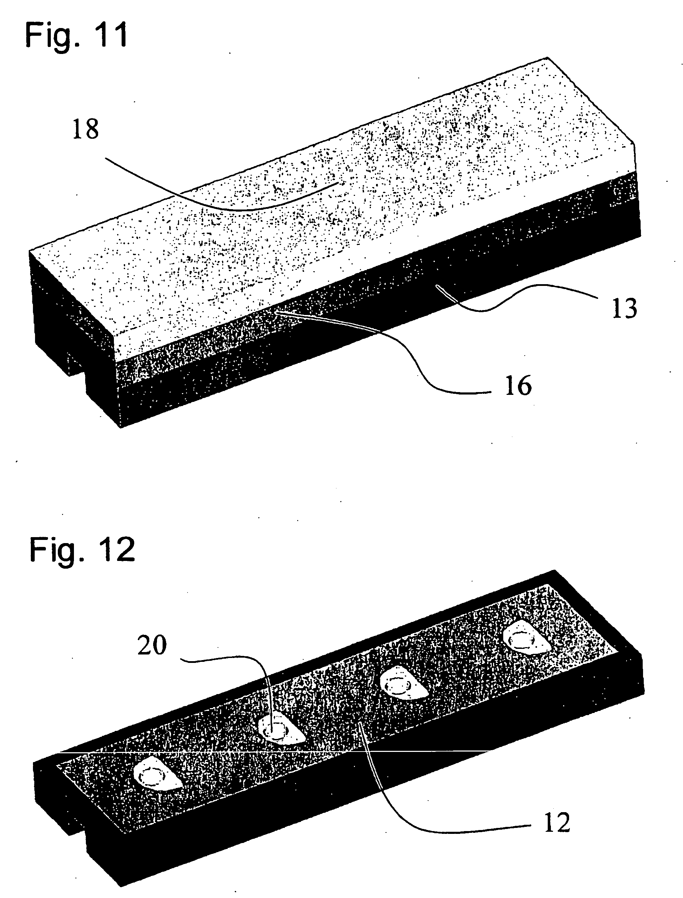

Plate 18 with pins 19 is put on top of the plate 16 with holes 17, the pins 19 goes through the holes 17 and down into the liquid plastic 15. Now the liquid plastic 15 is light cured with light of an appropriate wavelength, e.g. ultraviolet light. If the packaging is made of transparent plastic, the lighting can come from a lamp from below and up through the packaging. Alternatively the plate with holes or the plate with pins can be transparent, and made out of e.g. plastic or glass. This enables that the lighting can be performed through these layers. The exposure time will vary depending on how strong the lamp is. A strong lamp will be able to cure the plastic inserts in about 30 seconds (c.f. fig. 10 and fig.11).

After the plastic is cured first the plate 18 with pins 19 is removed. While this plate 18 is removed, the plate 16 with holes 17 secures, that the plastic inserts are fastened in the packaging. Hereafter the plate 16 with holes 17 is removed, and now the insertions are finished and packed.

If the inserts shall be produced with holes, the holes 14 in the packaging 12 is not filled entirely with liquid plastic, because when the pins 8 are pressed down into the plastic 15 it will rise. If the inserts shall be produced without holes you can fill the holes 14 in the packaging 12 entirely with plastic. Hereafter you can either choose to light cure the inserts without covering the packaging with a plate, or you can choose to cover the packaging with a plate without holes.

Although the invention above has been described in connection with preferred embodiments of the invention, it will be evident for a person skilled in the art that several modifications are conceivable without departing from the invention as defined by the following claims.

## Claims

1. A premanufactured dental insert (1) for a tooth filling, comprising a material suitable for transmitting light, said insert (1) comprising a surface (3) and a body (4) extending from said surface (3), **characterized in that** at least one cavity (2) is arranged in the surface (3) and extends from the surface (3) to at least a centre of the body (4) for complementary interaction with a tip (7) of a handling device (5).

2. A premanufactured dental insert (1) as claimed in claim 1, wherein the cavity (2) in cross-section is essentially circular, elliptical or polygonal, such as square or hexagonal.

3. A premanufactured dental insert (1) as claimed in claim 1 or 2, wherein the cavity (2) tapers from the surface (3) towards the centre of the body (4).

4. A premanufactured dental insert (1) as claimed in claim 3, wherein the cavity (2) is essentially conical.

5. A premanufactured dental insert (1) as claimed in any one of the preceding claims, wherein the cavity (2) extends through the premanufactured dental insert (1).

6. A premanufactured dental insert (1) as claimed in any one of the preceding claims, wherein the body (4) of the premanufactured dental insert (1) is shaped for complementary interaction with a tooth.

7. A premanufactured dental insert (1) as claimed in any one of the preceding claims, wherein the premanufactured dental insert (1) is made of plastic, porcelain, glass or any combination thereof.

8. A premanufactured dental insert (1) as claimed in any one of the preceding claims, wherein the premanufactured dental insert (1) is made of a transparent material.

9. A premanufactured dental insert (1) as claimed in any one of the preceding claims, wherein the premanufactured dental insert (1) consists of a material capable of curing in response to electromagnetic radiation, such as light.

10. A premanufactured dental insert (1) as claimed in any one of the preceding claims, wherein the premanufactured dental insert (1) is made of composite resin.

11. A premanufactured dental insert (1) as claimed in claim 10, wherein the composite resin is at least partially uncured.

## Patentansprüche

1. Vorgefertigtes zahnärztliches Insert (1) für eine Zahnfüllung, umfassend ein Material, das zum Durchlassen von Licht geeignet ist, wobei das Insert (1) eine Oberfläche (3) und einen Körper (4), der sich von der Oberfläche (3) erstreckt, umfasst, **dadurch gekennzeichnet, dass** mindestens ein Hohlraum (2) in der Oberfläche (3) angeordnet ist und sich von der Oberfläche (3) zu mindestens einer Mitte des Körpers (4) erstreckt, für eine komplementäre Wechselwirkung mit einer Spitze (7) einer Manipulationsvorrichtung (5).

2. Vorgefertigtes zahnärztliches Insert (1) nach Anspruch 1, wobei der Hohlraum (2) im Querschnitt im Wesentlichen kreisförmig, elliptisch oder polygonal ist, wie quadratisch oder hexagonal.

3. Vorgefertigtes zahnärztliches Insert (1) nach Anspruch 1 oder 2, wobei sich der Hohlraum (2) von der Oberfläche (3) zu der Mitte des Körpers (4) hin verjüngt.

4. Vorgefertigtes zahnärztliches Insert (1) nach Anspruch 3, wobei der Hohlraum (2) im Wesentlichen konisch ist.

5. Vorgefertigtes zahnärztliches Insert (1) nach einem der vorangehenden Ansprüche, wobei sich der Hohlraum (2) durch das vorgefertigte zahnärztliche Insert (1) erstreckt.

6. Vorgefertigtes zahnärztliches Insert (1) nach einem der vorangehenden Ansprüche, wobei der Körper (4) des vorgefertigten zahnärztlichen Inserts (1) für eine komplementäre Wechselwirkung mit einem Zahn geformt ist.

7. Vorgefertigtes zahnärztliches Insert (1) nach einem der vorangehenden Ansprüche, wobei das vorgefertigte zahnärztliche Insert (1) aus Kunststoff, Porzellan, Glas oder einer Kombination davon besteht.

8. Vorgefertigtes zahnärztliches Insert (1) nach einem der vorangehenden Ansprüche, wobei das vorgefertigte zahnärztliche Insert (1) aus einem transparenten Material besteht.

9. Vorgefertigtes zahnärztliches Insert (1) nach einem der vorangehenden Ansprüche, wobei das vorgefertigte zahnärztliche Insert (1) aus einem Material besteht, das als Reaktion auf elektromagnetische Strahlung, wie Licht, härten kann.

10. Vorgefertigtes zahnärztliches Insert (1) nach einem der vorangehenden Ansprüche, wobei das vorgefertigte zahnärztliche Insert (1) aus einem Composit-Harz besteht.

11. Vorgefertigtes zahnärztliches Insert (1) nach Anspruch 10, wobei das Composit-Harz mindestens teilweise ungehärtet ist.

## Revendications

1. Insert dentaire préfabriqué (1) pour un amalgame dentaire, ledit insert (1) comprenant un matériau approprié afin de transmettre la lumière, une surface (3) et un corps (4) s'étendant à partir de ladite surface (3), **caractérisé en ce que** au moins une cavité (2) est ménagée dans la surface (3) et s'étend de la surface (3) vers au moins un centre du corps (4), en vue d'une interaction complémentaire avec une pointe (7) d'un dispositif de manipulation (5).

2. Insert dentaire préfabriqué (1) selon la revendication 1, dans lequel la cavité (2) en coupe transversale est essentiellement circulaire, elliptique ou polygonale, telle que carrée ou hexagonale.

3. Insert dentaire préfabriqué (1) selon la revendication 1 ou 2, dans lequel la cavité (2) s'effile à partir de la surface (3) vers le centre du corps (4).

4. Insert dentaire préfabriqué (1) selon la revendication 3, dans lequel la cavité (2) est essentiellement conique.

5. Insert dentaire préfabriqué (1) selon une quelconque des revendications précédentes, dans lequel la cavité (2) s'étend à travers l'insert dentaire préfabriqué (1).

6. Insert dentaire préfabriqué (1) selon une quelconque des revendications précédentes, dans lequel le corps (4) de l'insert dentaire préfabriqué (1) est façonné en vue d'une interaction complémentaire avec une dent.

7. Insert dentaire préfabriqué (1) selon une quelconque des revendications précédentes, dans lequel l'insert dentaire préfabriqué (1) est constitué de plastique, porcelaine, verre ou n'importe quelle combinaison de ceux-ci.

8. Insert dentaire préfabriqué (1) selon une quelconque des revendications précédentes, dans lequel l'insert dentaire préfabriqué (1) est constitué d'un matériau transparent.

9. Insert dentaire préfabriqué (1) selon une quelconque des revendications précédentes, dans lequel l'insert dentaire préfabriqué (1) est constitué d'un matériau apte à durcir en réponse à un rayonnement électromagnétique, comme la lumière.

10. Insert dentaire préfabriqué (1) selon une quelconque des revendications précédentes, dans lequel l'insert dentaire préfabriqué (1) est constitué de résine composite.

11. Insert dentaire préfabriqué (1) selon la revendication 10, dans lequel la résine composite est au moins partiellement non durcie.
